(19) Europäisches Patentamt / European Patent Office / Office européen des brevets

(11) **EP 2 890 527 B1**

(12) **EUROPEAN PATENT SPECIFICATION**

(45) Date of publication and mention
of the grant of the patent:
**17.05.2017   Bulletin 2017/20**

(21) Application number: **13785613.4**

(22) Date of filing: **23.08.2013**

(51) Int Cl.:
*B25J 9/08* (2006.01)          *B25J 9/10* (2006.01)
*B25J 18/00* (2006.01)         *B25J 19/06* (2006.01)

(86) International application number:
**PCT/IB2013/056834**

(87) International publication number:
**WO 2014/033603 (06.03.2014 Gazette 2014/10)**

(54) **VARIABLE-STIFFNESS ACTUATOR WITH PASSIVE DISTURBANCE REJECTION**

STELLGLIED MIT VARIABLER BIEGEFÄHIGKEIT MIT PASSIVEN STÖRUNGSUNTERDRÜCKUNG

ACTIONNEUR À FLEXIBILITÉ VARIABLE AVEC UN REJET DES PERTURBATIONS PASSIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.08.2012   IT TO20120743**

(43) Date of publication of application:
**08.07.2015   Bulletin 2015/28**

(73) Proprietor: **Fondazione Istituto Italiano Di Tecnologia**
**16163 Genova (IT)**

(72) Inventors:
• **NORI, Francesco**
  **I-16145 Genova (IT)**
• **BERRET, Bastien**
  **I-16163 Genova (IT)**
• **FIORIO, Luca**
  **I-12030 POLONGHERA (Cuneo) (IT)**
• **PARMIGGIANI, Alberto**
  **I-16123 Genova (IT)**
• **SANDINI, Giulio**
  **I-16137 Genova (IT)**

(74) Representative: **Rondano, Davide et al**
**Corso Emilia 8**
**10152 Torino (IT)**

(56) References cited:
**WO-A1-2012/038931     US-A1- 2006 249 315**

• **CATALANO M G ET AL: "VSA-HD: From the enumeration analysis to the prototypical implementation", INTELLIGENT ROBOTS AND SYSTEMS (IROS), 2010 IEEE/RSJ INTERNATIONAL CONFERENCE ON, IEEE, PISCATAWAY, NJ, USA, 18 October 2010 (2010-10-18), pages 3676-3681, XP031920195, DOI: 10.1109/IROS.2010.5649774 ISBN: 978-1-4244-6674-0**
• **MANUEL G CATALANO ET AL: "Mechanism design for Variable Stiffness Actuation based on enumeration and analysis of performance", 2010 IEEE INTERNATIONAL CONFERENCE ON ROBOTICS AND AUTOMATION : ICRA 2010 ; ANCHORAGE, ALASKA, USA, 3 - 8 MAY 2010, IEEE, PISCATAWAY, NJ, USA, 3 May 2010 (2010-05-03), pages 3285-3291, XP031743248, ISBN: 978-1-4244-5038-1**
• **HURST J W ET AL: "An actuator with physically variable stiffness for highly dynamic legged locomotion", ROBOTICS AND AUTOMATION, 2004. PROCEEDINGS. ICRA '04. 2004 IEEE INTERN ATIONAL CONFERENCE ON NEW ORLEANS, LA, USA APRIL 26-MAY 1, 2004, PISCATAWAY, NJ, USA,IEEE, US, vol. 5, 26 April 2004 (2004-04-26), pages 4662-4667, XP010768130, DOI: 10.1109/ROBOT.2004.1302453 ISBN: 978-0-7803-8232-9**

**Description**

The present invention relates to a variable-stiffness actuator, particularly for robotic applications, having the features set forth in the preamble of independent claim 1.

The currently available robots are excellent machines, but they are not able to interact with the surrounding environment yet, especially in case of unstructured environments. Recent human studies have shown the fundamental role played by muscle co-activation in reacting to unpredictable events during manipulation tasks. In particular, the possibility to vary the stiffness of the arm joints (shoulder, elbow and wrist joints) allows humans to easily interact with fast-changing environments and to reject unpredictable disturbances. Starting from these considerations, in the last decade roboticists have designed actuators capable of actively varying their intrinsic compliance in order to reproduce in modem robots the same control capability that humans have, i.e. the same ability to change the intrinsic compliance of the body. These actuators are usually known as variable-stiffness actuators (VSA), variable-impedance actuators (VIA) or actuators with adjustable stiffness (AwAS). See for example the publication US 2006/249315 A1. Figure 1 of the attached drawings schematically shows a variable-stiffness actuator, in particular a rotary actuator, in which a rotary motor M is connected to a rotating output member O through a variable-stiffness elastic element S. The position (angular position) of the shaft of the motor M is indicated $q$, while the position (angular position) of the output member O is indicated $\theta$. The stiffness of the elastic element S is represented by the function $g(q-\theta)$. The force acting on the shaft of the motor M is the input variable of the system and is therefore indicated $u$. All the other forces acting on the shaft of the motor M and on the output member O are represented by the functions $f(q,\dot{q})$ and $h(\theta,\dot{\theta})$, respectively. The dynamics of such a system are described by the following model:

$$\begin{cases} \ddot{q} = f(q,\dot{q}) + g(q-\theta) + u \\ \ddot{\theta} = h(\theta,\dot{\theta}) - g(q-\theta) \end{cases} \qquad (1)$$

Linearized around an equilibrium configuration ($q = q_{eq}$ and $\theta = \theta_{eq}$), system (1) becomes:

$$\dot{x} = \begin{bmatrix} 0 & 0 & 1 & 0 \\ 0 & 0 & 0 & 1 \\ a+c & -c & d & 0 \\ -c & b+c & 0 & e \end{bmatrix} x + \begin{bmatrix} 0 \\ 0 \\ 1 \\ 0 \end{bmatrix} u , \qquad (2)$$

where x is the deviation from the equilibrium configuration, i.e.:

$$x = \begin{bmatrix} q - q_{eq} \\ \theta - \theta_{eq} \\ \dot{q} - \dot{q}_{eq} \\ \dot{\theta} - \dot{\theta}_{eq} \end{bmatrix} ,$$

and
where parameters $a$, $b$, $c$, $d$ and $e$ are defined by the following derivatives, calculated in the equilibrium configuration:

$$a = \frac{\partial f}{\partial q} , \quad b = \frac{\partial h}{\partial \theta} , \quad c = \frac{\partial g}{\partial q} , \quad d = \frac{\partial f}{\partial \dot{q}} , \quad e = \frac{\partial h}{\partial \dot{\theta}} .$$

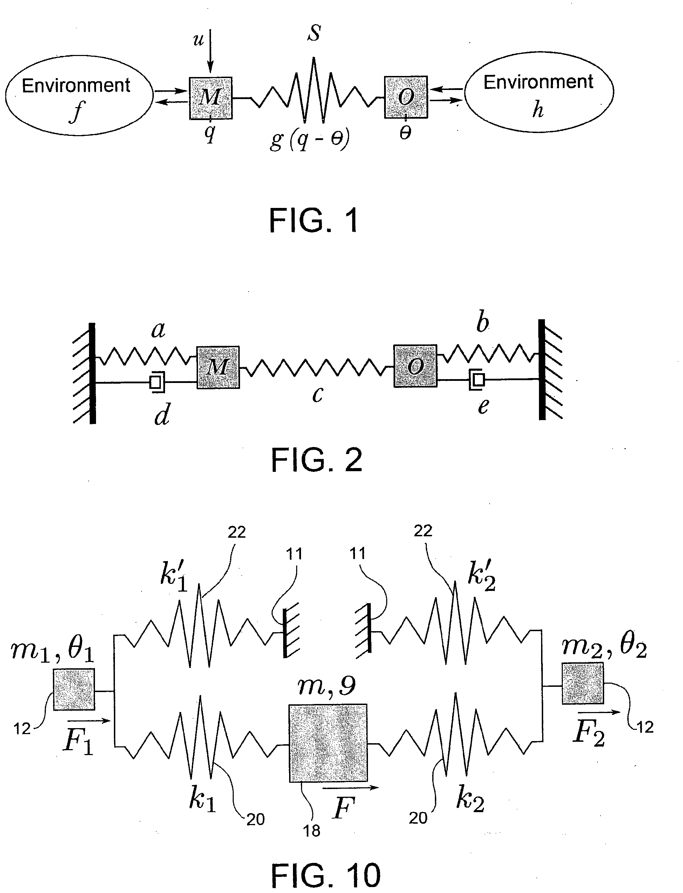

Therefore, equation (2) describes in linearized form the dynamics of a variable-stiffness actuator, which is schematically shown in Figure 2 of the attached drawings. The elastic element $a$ and the damper $d$ represent, in linearized form, the interaction of the motor M with the external environment, whereas the elastic element $b$ and the damper e represent, in linearized form, the interaction of the output member O with the external environment.

Starting from these considerations, the Applicant's object has been to provide a variable-stiffness actuator, in particular a rotary actuator, capable of passively (i.e. without using a feedback control, but simply exploiting the intrinsic characteristics of the actuator) reacting to disturbances.

Assuming that the disturbances are represented by stochastic variables acting as forces on the shaft of the motor M (white noise with variance $\sigma_q$) and on the output member O (white noise with variance $\sigma_\theta$), a quantitative measure of the disturbance rejection capability is represented by the covariance matrix P, defined as the steady-state covariance of the state vector x in response to the applied perturbations. The smaller the eigenvalues of the matrix P, the higher the passive disturbance rejection. More specifically, a good quantitative measure of the passive disturbance rejection is given by the trace of the matrix P, i.e. by the sum of the eigenvalues of that matrix. For the sake of simplicity, here are some simplified equations that represent the limits of the trace of the matrix P when the stiffness c (that is of course variable in a variable-stiffness actuator) of the elastic element S tends to zero or to infinite:

$$\lim_{c \to 0} trace(P) = \frac{1}{2} \frac{\sigma_q \cdot b \cdot e \cdot (a+1) + \sigma_\theta \cdot a \cdot d \cdot (a+1)}{a \cdot b \cdot d \cdot e}, \qquad (4)$$

$$\lim_{c \to \infty} trace(P) = \frac{(a+b) \cdot (\sigma_q^2 + \sigma_\theta^2) + (\sigma_q + \sigma_\theta)^2}{(a+b) \cdot (d+e)}, \qquad (5)$$

$$\frac{\partial trace(P)}{\partial c}\bigg|_{d=e=1} = -\frac{1}{2} \frac{(a \cdot \sigma_\theta - b \cdot \sigma_q)^2}{(a \cdot c + b \cdot c + a \cdot b)^2} < 0. \qquad (6)$$

Equations (4), (5) and (6) show that the passive disturbance rejection increases monotonically with the stiffness c of the elastic element interposed between the motor M and the output member O. However, the parameters a, b, d and e are also fundamental to ensure a certain passive disturbance rejection capability. In the known examples of variable-stiffness actuators both the parameter a and the parameter b are equal to zero, since no elastic elements are arranged either between the motor M and the external environment or between the output member O and the external environment. Since the trace of the matrix P tends to infinite when a and b tend to zero, the known variable-stiffness actuators do not have any passive disturbance rejection capability.

It is therefore an object of the present invention to provide a variable-stiffness actuator having passive disturbance rejection capability.

This and other objects are fully achieved according to the present invention by virtue of a variable-stiffness actuator having the characteristics set forth in the characterizing part of independent claim 1.

Preferred embodiments of a variable-stiffness actuator according to the present invention form the subject-matter of the dependent claims, the content of which is to be regarded as an integral and integrating part of the present description.

In short, the invention is based on the idea of providing a variable-stiffness actuator of the above-specified type, comprising a body to which the motor is fixed and on which the output member is supported and further comprising elastic means interposed between the body and the motor so as to apply on this latter an elastic reaction torque/force opposing the driving torque/force generated by the motor. The presence of such elastic means (corresponding to the elastic element a of the model of Figure 2) provides the actuator with passive disturbance rejection capability.

According to a preferred embodiment of the invention, the elastic means interposed between the body of the actuator and the motor are variable-stiffness elastic means, in particular non-linear variable-stiffness elastic means, configured in such a manner that their stiffness increases or decreases (and therefore also the passive disturbance rejection capability of the actuator increases or decreases) upon activation of the motor.

According to a preferred embodiment of the invention, the actuator comprises two motors, each of which is connected to the output member through respective first variable-stiffness elastic means, and respective second variable-stiffness elastic means are interposed between each motor and the body of the actuator, the motors and the first and second elastic means being configured with an agonist-antagonist configuration in such a manner that simultaneous activation of the two motors leads to an increase in the stiffness of the first and second elastic means and hence to an increase in the passive disturbance rejection capability of the actuator.

Further characteristics and advantages of the present invention will become clear from the following detailed description, given purely by way of non-limiting example with reference to the appended drawings, in which:

Figure 1 shows a model of a variable-stiffness actuator according to the prior art;

Figure 2 shows the linearized version of the model of Figure 1;

Figure 3 shows a three-dimensional view of a variable-stiffness rotary actuator according to a preferred embodiment of the present invention;

Figure 4 shows a section view, taken through a plane perpendicular to the axis of rotation of the output member, of the rotary actuator of Figure 3;

Figure 5 shows a three-dimensional view, on an enlarged scale, of a detail of the rotary actuator of Figure 3;

Figure 6 shows a section view, taken through a plane passing through the axis of rotation of the output member and parallel to the axes of rotation of the motors, of the rotary actuator of Figure 3;

Figure 7 shows an exploded view of one of the two elastic elements interposed between the two motors and the output member of the rotary actuator of Figure 3;

Figure 8 schematically shows the elastic element of Figure 7;

Figure 9 shows a section view of the two elastic elements interposed between the two motors and the body of the rotary actuator of Figure 3; and

Figure 10 shows a model of the rotary actuator of Figure 3.

The following detailed description will be given with reference in particular to a variable-stiffness actuator made as a rotary actuator, although, as explained further on, the basic concept of the invention is also applicable to a variable-stiffness actuator made as a linear actuator.

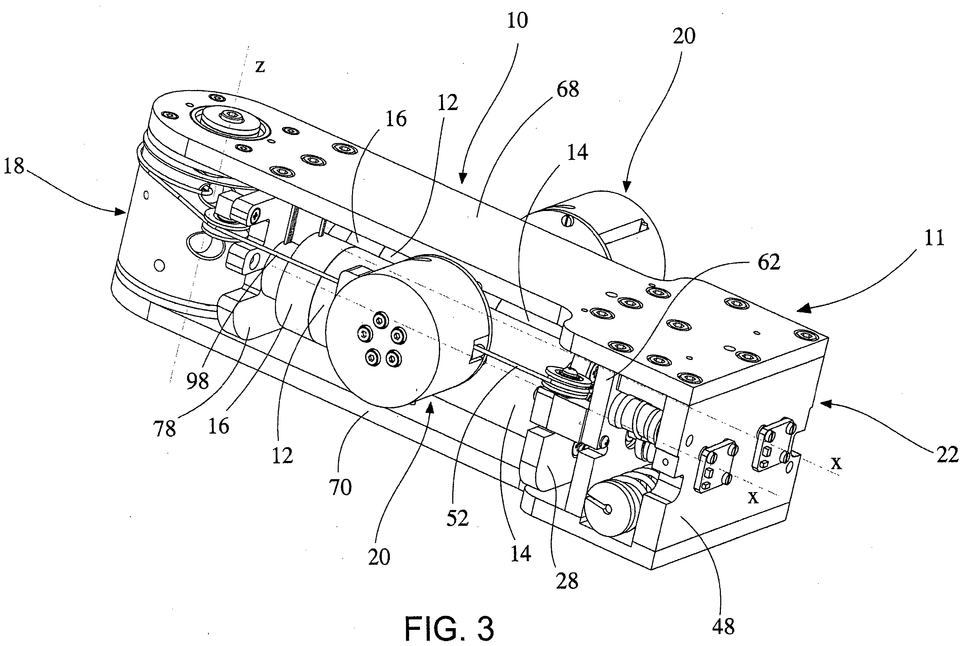

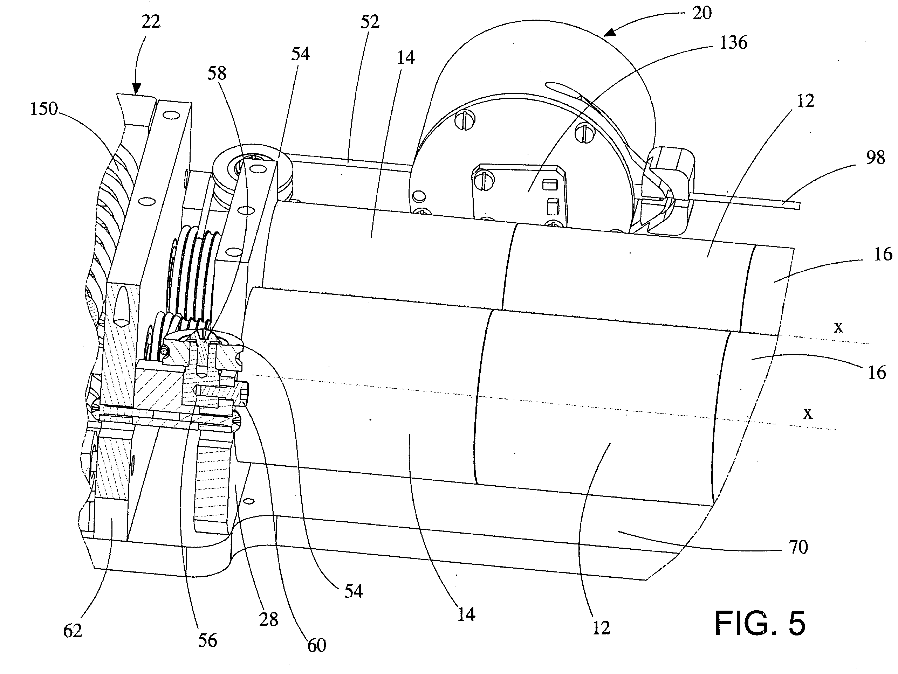

With reference to Figures 3 to 9, a variable-stiffness rotary actuator according to a preferred embodiment of the present invention is generally indicated 10 and basically comprises a body 11, two motors 12 fixed to the body 11, two reducers 14 coupled each to the respective motor 12, two angular position and velocity sensors 16 associated each to the respective motor 12, an output member 18 intended to bear an external load (not shown), two first elastic elements 20 interposed each between the respective motor 12 (or the respective reducer 14, if any) and the output member 18, and two second elastic elements 22 interposed each between the respective motor 12 (or the respective reducer 14, if any) and the body 11. The output member 18 is supported by the body 11 so as to be rotatable about an axis of rotation z, whereas the motors 12 are arranged so as to generate each a rotary motion about a respective axis of rotation x, the two axes of rotation x lying in a plane perpendicular to the axis of rotation z and being parallel to each other.

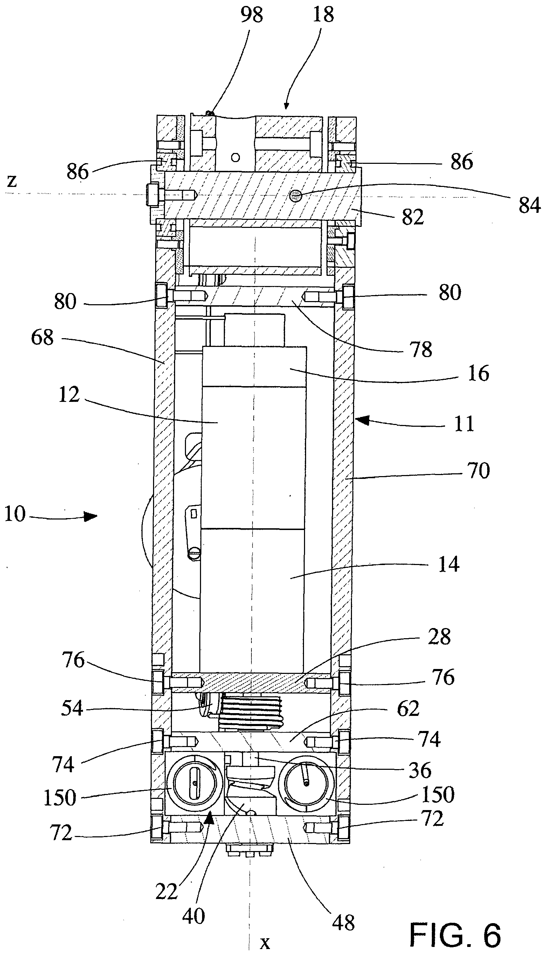

As far as the body 11 is concerned, it comprises, as shown in particular in Figures 3 and 6, a pair of main plates 68 and 70, that is to say, an upper plate and a lower plate (with respect to the point of view of a person looking at Figure 3), respectively, arranged parallel to each other and parallel to the plane in which the axes of rotation x lie. The body 11 further comprises a number of connection plates that extend perpendicular to the two main plates 68 and 70 and are connected to these latter by means of screws. More specifically, these connection plates comprise a base plate 48, which is placed at the end of the body 11 opposite to that where the output member 18 is located and is fixed to the two main plates 68 and 70 by means of screws 72, a motor-carrying plate 28 fixed to the two main plates 68 and 70 by means of screws 76, a plate 62 which is arranged between the motor-carrying plate 28 and the base plate 48 and is fixed to the two main plates 68 and 70 by means of screws 74, and an output-side plate 78 which is placed on the same side as the output member 18 and is fixed to the two main plates 68 and 70 by means of screws 80.

The output member 18 is mounted on a shaft 82 and is drivingly connected for rotation thereto by means of a peg 84. The shaft 82, and hence also the output member 18 therewith, is supported for rotation about the axis of rotation z by means of a pair of bearings 86 that are fixed to the two main plates 68 and 70 of the body 11.

The motors 12 may be electric motors or motors of any other type (for example hydraulic motor, pneumatic motors, piezoelectric motors, etc.) and have each an output rotor 24 directly connected to a respective motor shaft 26. The motor shaft 26 is rotatable about the axis of rotation x and is connected on the one side to the respective reducer 14 (that may be for example a planetary reducer), for example by means of a locking screw or a key, and on the opposite side to the respective angular position and velocity sensor 16 (that may be a magnetic encoder, an optical encoder, a potentiometer etc.) that measures the angular position and velocity thereof. Each assembly formed by the motor 12, the reducer 14 and the angular position and velocity sensor 16 is rigidly connected, preferably on the same side as the reducer 14, to the body 11, in particular to the motor-carrying plate 28, by means of screws 30. Both the reducers 14 and the angular position and velocity sensors 16, which are both provided for in the illustrated embodiment, might even be omitted.

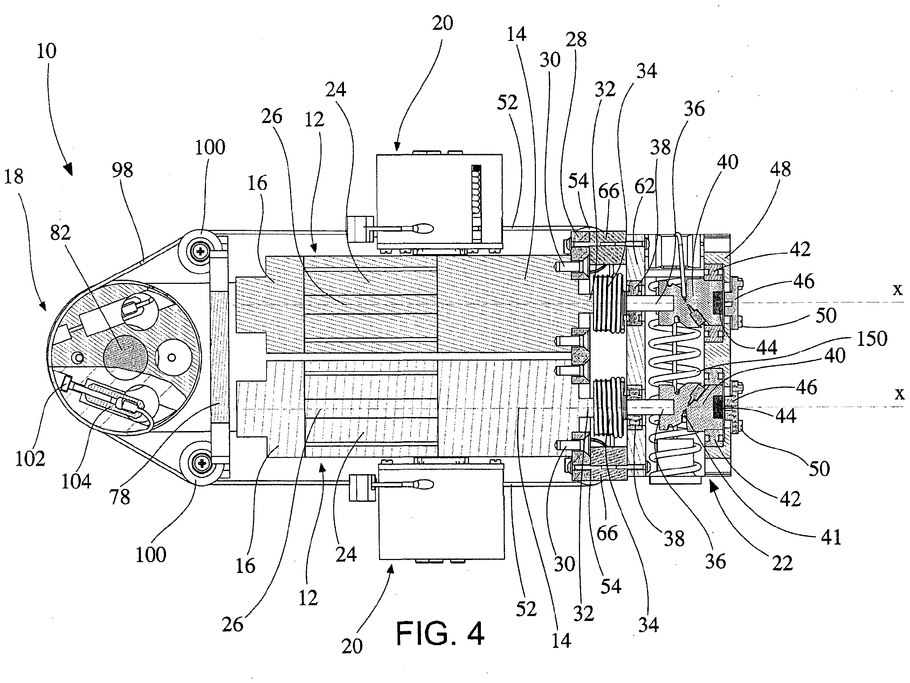

The rotary motion generated by each motor 12 and reducer 14 (if any) unit about the respective axis of rotation x is converted into the rotary motion of the output member 18 about the axis of rotation z by means of a respective cable motion conversion mechanism along which the respective first elastic element 20 is placed, as will be explained in detail further on. The configuration of the two motor 12 and reducer 14 units and of the respective motion conversion mechanisms is an agonist-antagonist configuration, in that these units are arranged to set the output member 18 into rotation in opposite directions. More specifically, with reference to the point of view of a person looking at Figure 4, the upper motor 12 and reducer 14 unit is arranged to set the output member 18 into clockwise rotation, whereas the lower motor 12 and reducer 14 unit is arranged to set the output member 18 into counter-clockwise rotation.

A cable winder 34 is mounted on an output shaft 32 of each reducer 14, which is also rotatable about the axis of rotation x of the motor shaft 26 of the respective motor 12, and is drivingly connected for rotation with the respective output shaft 32, for example by means of a locking screw or a key (not shown). A respective first cable 52 is wound on each cable winder 34 and is connected on the other end to the respective first elastic element 20, in such a manner that each first cable 52 transmits to the respective first elastic element 20, as translational motion along a direction parallel to the axis of rotation x of the respective motor 12, the rotary motion generated by this latter. In this connection, each first cable 52 unwinds tangentially from the respective cable winder 34 and, via a respective first guide pulley 54 supported for rotation about an axis parallel to the axis of rotation z of the output member 18, is diverted 90 degrees and then runs parallel to the axis of rotation x of the respective motor 12. Each first guide pulley 54 is mounted by means of a screw 58 on a respective support 56 that is fixed to the motor-carrying plate 28 by form-fitting and by means of a screw 60.

In addition to the first cable 52, each cable motion conversion mechanism comprises a respective second cable 98 that is connected on the one hand to the respective first elastic element 20 and on the other to the output member 18. More specifically, each second cable 98 extends from the respective first elastic element 20 in a direction parallel to the axis of rotation x and is then diverted by means of a respective second guide pulley 100, so as to wind tangentially on the output member 18, to which it is anchored by means of an anchoring member 104. The anchoring member 104 preferably has a threaded hole in which a screw 102 engages, so as to allow to adjust the tension in the second cable 98 by rotation of the screw 102 in one direction or the other. Each second cable 98 has therefore the function of converting the linear displacement of the respective first elastic element 20 into an angular displacement of the output member 18, as well as of converting the force applied by the respective first elastic element 20 into a torque applied on the output member 18 about the axis of rotation z.

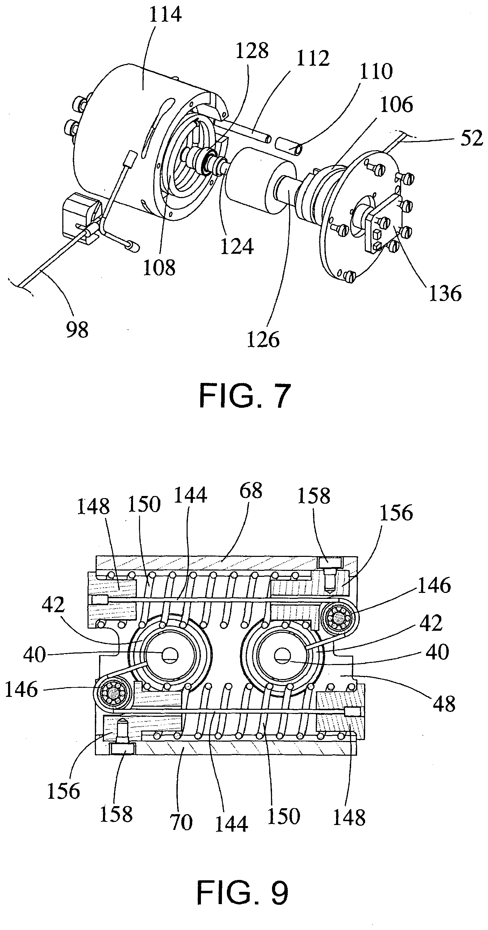

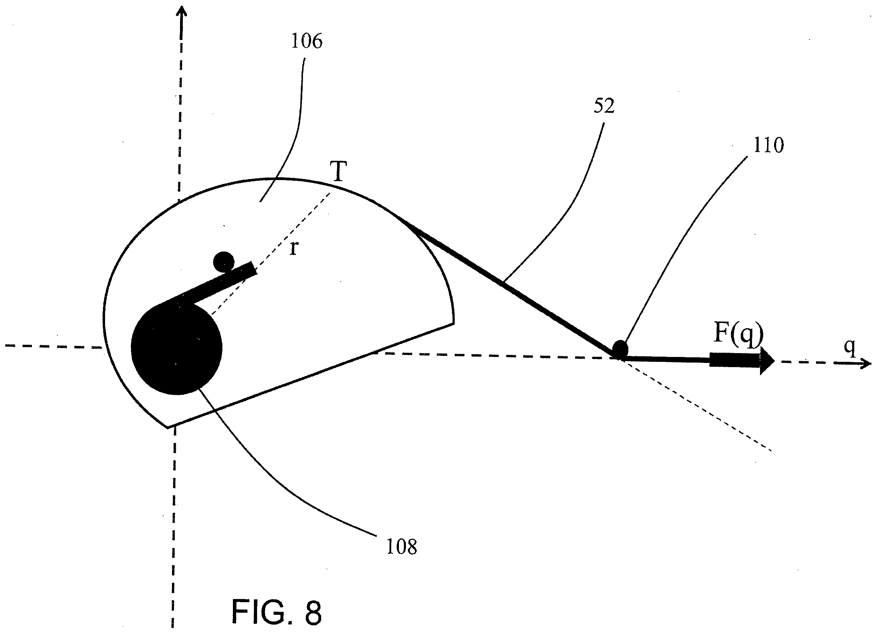

With reference now in particular to Figure 7, each first elastic element 20 is connected on the one hand to the respective cable winder 34 through the respective first cable 52 and on the other to the output member 18 through the respective second cable 98. In the proposed embodiment, each first elastic element 20 is a non-linear variable-stiffness elastic element, that works by exploiting the change in the radius of a respective first spool 106 having a non-circular cross-section on which the respective first cable 52 is wound. More specifically, each first elastic element 20 comprises a shell 114, in particular a shell of cylindrical shape having its own axis oriented perpendicular both to the axis x and to the axis z, that is connected to the respective second cable 98 so as to transmit to this latter the linear movement in a direction parallel to the axis x. The first spool 106, and a torsion spring 108 therewith, are received inside the shell 114 and are both arranged coaxial to the shell 114. The torsion spring 108 is coupled at an end thereof to the shell 114 and at the opposite end to the first spool 106. The first spool 106 is keyed to a shaft 124 that is supported for rotation by the shell 114 by means of bearings 126 and 128. Each first elastic element 20 further comprises a guide pulley 110 mounted on a pin 112 fixed to the shell 114, the guide pulley 110 having the function of ensuring that the portion of the respective first cable 52 comprised between the first guide pulley 54 and the first elastic element 20 extends parallel to the axis x. Each first elastic element 20 finally comprises a respective angular position sensor 136 for detecting the angular position of the respective first spool 106. In the proposed embodiment, the angular position sensor 136 is a magnetic encoder, but it might even be an optical encoder or an angular position sensor of any other type. The schematic view of Figure 8 shows that the non-linear change in the stiffness of each first elastic element 20, calculated as the ratio of the force $F(q)$ that is applied by the elastic element as a result of an elongation $q$ to the same elongation $q$, is due to the change in the radius of the first spool 106, and hence to the change in the distance of the tangency point T between the first spool 106 and the first cable 52 from the axis of rotation of the same spool. Since it is known how the radius of the first spool 106 changes depending on the angular position of this latter, and therefore how the stiffness of the first elastic element 20 changes depending on the angular position of the first spool 106, it is possible to estimate, from the angular position of the first spool 106 measured by the angular position sensor 136, the force applied to the first elastic element 20.

The second elastic elements 22, each of which is connected on the one hand to the respective motor 12 (or to the respective reducer 14, if any) and on the other to the body 11 of the actuator, will be described now with reference in particular to Figures 4 and 9. In the proposed embodiment, the second elastic elements 22, like the first elastic elements 20, are made as non-linear variable-stiffness elastic elements that work by exploiting each the change in the radius of a respective second spool 40 that has a non-circular cross-section and is drivingly connected for rotation with a respective transmission shaft 36, that is in turn drivingly connected for rotation with the respective cable winder 34. Each transmission shaft 36 is supported for rotation about the respective axis of rotation x by means of a respective bearing 38 mounted in the plate 62 of the body 11. Each second spool 40 is therefore drivingly connected for rotation with the output shaft 32 of the respective reducer 14, if any, i.e. with the motor shaft 26 of the respective motor 12. Each spool 40 has a respective variable-radius helical groove 41, in which a respective cable 144 is received, thereby allowing to obtain the desired relation between the angular displacement and the radius of the spool without the risk that the cable overlaps on itself. Each spool 40 is supported for rotation by a respective bearing 42 mounted in the base plate 48 of the body 11. An angular position sensor 46, made for example as a magnetic encoder, is associated to each spool 40 for detecting the angular position of the associated spool 40. Each cable 144 is connected on the one hand to the respective spool 40 and on the other to a first abutment element 148 against which a respective spring 150, in particular a cylindrical helical spring, abuts. Preferably, the springs 150 are arranged with their own axes oriented parallel to each other and lying in a plane perpendicular to the axes x of the bobbins 40 and abut at the one end against the first abutment element 148, as movable abutment element, and at the opposite end against a respective second abutment element 156, as stationary abutment element. The second abutment elements 156 are fixed by means of screws 158 the one to the main plate 68 of the body 11 and the other to the main plate 70 of the body 11. Each cable 144 is partially wound on a respective guide pulley 146 in such a manner that its direction changes from tangent to the bottom surface of the groove 41 to coinciding with the axis of the respective spring 150. Moreover, each second elastic element 22 is configured in such a manner that upon rotation of the motor shaft 26 of the respective motor 12, and hence of the respective spool 40, the respective cable 144 is pulled and presses the respective spring 150 through the respective first abutment element 148, whereby each spring 150 applies on the respective motor shaft 26, through the respective cable 140, an elastic reaction torque that opposes the driving torque applied by the respective motor 12 to the motor shaft 26.

In short, the above-described configuration of the rotary actuator 10 is such that the two motors 12 set the output member 18 into rotation in opposite directions and the activation of each motor 12 causes on the one hand an increase in the stiffness of the respective first elastic element 20 and on the other an increase in the stiffness of the respective second elastic element 22, and therefore, based on what has been previously stated with reference to equations (4), (5) and (6), an increase in the passive disturbance rejection capability of the actuator.

A model of the rotary actuator 10 according to the above-described embodiment of the invention is shown in Figure 10, where the two motors 12 are characterized each by a mass $m_1$, $m_2$ and by an angular position $\theta_1$, $\theta_2$, the output member 18 is characterized by a mass $m$ and by an angular position $\theta$, the two first elastic elements 20, i.e. the two elastic elements interposed between the two motors 12 and the output member 18, are characterized each by a respective stiffness $k_1$, $k_2$, and the two second elastic elements 22, i.e. the two elastic elements interposed between the two motors 12 and the body 11, are characterized each by a respective stiffness $k_1'$, $k_2'$.

Naturally, the principle of the invention remaining unchanged, the embodiments and the constructional details may vary widely from those described and illustrated purely by way of non-limiting example, without thereby departing from the scope of the invention as defined in the attached claims.

For example, although in the above-described embodiment the two motors are made as rotary motors, i.e. as motors that produce a rotary motion, they might also be made as linear motors, i.e. as motors that produce a linear motion.

Moreover, although the above-described embodiment relates to a rotary actuator, i.e. to an actuator whose output member is a rotating member, the invention is also applicable to a linear actuator, i.e. to an actuator whose output member is movable with a linear motion. A linear actuator might for example be obtained starting from the rotary actuator illustrated in Figures 3 to 9 by adding a motion conversion mechanism that converts the rotary motion of the output member 18 (that in this case would operate as an intermediate motion transmission member) into a linear motion of the output member.

**Claims**

1. Variable-stiffness actuator (10), comprising
   a movable output member (18),
   motor means (12, 14) arranged to control the movement of the output member (18), first variable-stiffness elastic means (20) interposed between said motor means (12, 14) and the output member (18), in such a manner that the transmission of the motion between said motor means (12, 14) and the output member (18) occurs via said first variable-stiffness elastic means (20), and
   a body (11) which supports said motor means (12, 14) and the output member (18), **characterized in that** it further comprises second elastic means (22) interposed between the body (11) and said motor means (12, 14) so as to apply on said motor means (12, 14) an elastic reaction torque or force opposing the driving torque or force generated by said motor means (12, 14).

2. Actuator according to claim 1, wherein the output member (18) is supported by the body (11) for rotation about a first axis of rotation (z), said motor means (12, 14) being arranged to set the output member (18) into rotation about the first axis of rotation (z).

3. Actuator according to claim 1 or claim 2, wherein said second elastic means (22) are variable-stiffness elastic means.

4. Actuator according to claim 3, wherein said first and second elastic means (20, 22) are configured so that their stiffness increases when said motor means (12, 14) set the output member (18) into motion.

5. Actuator according to any of the preceding claims, wherein said motor means (12, 14) comprise two motors (12) arranged to control the movement of the output member (18) in opposite directions, wherein said first elastic means (20) comprise two first elastic elements (20) interposed each between a respective motor (12) and the output member (18), and wherein said second elastic means (22) comprise two second elastic elements (22) interposed each between a respective motor (12) and the body (11).

6. Actuator according to claim 5, further comprising two cable motion conversion mechanisms (34, 52, 98) associated each to one of the two motors (12, 14) to convert the motion generated by the respective motor (12, 14) into a motion of the output member (18) in a respective direction, and wherein the two first elastic elements (20) are part each of a respective cable motion conversion mechanism (34, 52, 98).

7. Actuator according to claim 2 and claim 6, wherein the two motors (12, 14) are adapted to generate a rotary motion each about a respective second axis of rotation (x), and wherein the two cable motion conversion mechanisms (34, 52, 98) are adapted to convert the rotary motion generated by the respective motor (12, 14) about the respective second axis of rotation (x) into a rotary motion of the output member (18) about the first axis of rotation (z) in a respective direction.

8. Actuator according to claim 7, wherein each cable motion conversion mechanism (34, 52, 98) comprises a cable winder (34) arranged to be set into rotation by the respective motor (12, 14), a first cable (52) which is wound on the one hand on the respective cable winder (34) and is connected on the other to the respective first elastic element (20), and a second cable (98) which is connected on the one hand to the respective first elastic element (20) and on the other to the output member (18).

9. Actuator according to claim 8, wherein each first elastic element (20) comprises a shell (114) to which an end of the respective first cable (52) or of the respective second cable (98) is attached, a first variable-radius spool (106) on which an end of the respective second cable (98) or of the respective first cable (52), respectively, is wound, and a first spring (108) interposed between the shell (114) and the first spool (106) so as to apply on the first spool (106) an elastic torque opposing the unwinding of the respective second cable (98) or of the respective first cable (52).

10. Actuator according to any of claims 7 to 9, wherein each second elastic element (22) comprises a second variable-radius spool (40) the rotation of which is controlled by the respective motor (12, 14), a second spring (150) connected at a first end thereof to the body (11) of the actuator, and a cable (144) which is wound on the one hand on the second spool (40) and is connected on the other hand to the opposite end of the second spring (150), whereby rotation of the second spool (40) resulting from the activation of the respective motor (12, 14) causes, via the respective cable (144), a deformation of the respective second spring (150).

**Patentansprüche**

1. Aktuator (10) mit variabler Steifigkeit, mit:

einem beweglichen Ausgangselement (18),
Motormitteln (12, 14), die zum Steuern der Bewegung des Ausgangselements (18) angeordnet sind,
ersten elastischen Mitteln (20) mit variabler Steifigkeit, die zwischen den Motormitteln (12, 14) und dem Ausgangselement (18) auf solch eine Art und Weise angeordnet sind, dass die Übertragung der Bewegung zwischen den Motormitteln (12, 14) und dem Ausgangselement (18) über die ersten elastischen Mittel (20) mit variabler Steifigkeit erfolgt, und
einem Körper (11), der die Motormittel (12, 14) und das Ausgangselement (18) trägt, **dadurch gekennzeichnet, dass** er ferner zweite elastische Mittel (22) aufweist, die zwischen dem Körper (11) und den Motormitteln (12, 14) derart angeordnet sind, dass sie ein elastisches Reaktionsmoment oder eine elastische Reaktionskraft, das dem Antriebsmoment oder die der Antriebskraft entgegenwirkt, die von den Motormitteln (12, 14) erzeugt wird, auf die Motormittel (12, 14) aufbringt.

2. Aktuator nach Anspruch 1, bei dem das Ausgangselement (18) von dem Körper (11) zur Drehung um eine erste Drehachse (z) gehalten wird, wobei die Motormittel (12, 14) derart angeordnet sind, dass sie das Ausgangselement (18) um die erste Drehachse (z) in Drehung versetzen.

3. Aktuator nach Anspruch 1 oder Anspruch 2, bei dem die zweiten elastischen Mittel (22) elastische Mittel mit variabler Steifigkeit sind.

4. Aktuator nach Anspruch 3, bei dem die ersten und zweiten elastischen Mittel (20, 22) derart ausgestaltet sind, dass sich ihre Steifigkeit erhöht, wenn die Motormittel (12, 14) das Ausgangselement (18) in Bewegung versetzen.

5. Aktuator nach einem der vorhergehenden Ansprüche, bei dem die Motormittel (12, 14) zwei Motoren (12) aufweisen, die zum Steuern der Bewegung des Ausgangselements (18) in entgegengesetzte Richtungen angeordnet sind, bei dem die ersten elastischen Mittel (20) zwei erste elastische Elemente (20) aufweisen, die jeweils zwischen einem entsprechenden Motor (12) und dem Ausgangselement (18) angeordnet sind, und bei dem die zweiten elastischen Mittel (22) zwei zweite elastische Elemente (22) aufweisen, die jeweils zwischen einem entsprechenden Motor (12) und dem Körper (11) angeordnet sind.

6. Aktuator nach Anspruch 5, ferner mit zwei Seil-Bewegungsumwandlungsmechanismen (34, 52, 98), die jeweils einem der zwei Motoren (12, 14) zugeordnet sind zum Umwandeln der von dem entsprechenden Motor (12, 14) erzeugten Bewegung in eine Bewegung des Ausgangselements (18) in einer entsprechenden Richtung, und bei dem die zwei ersten elastischen Elemente (20) jeweils Teil eines entsprechenden Seil-Bewegungsumwandlungsmechanismus (34, 52, 98) sind.

7. Aktuator nach Anspruch 2 und Anspruch 6, bei dem die zwei Motoren (12, 14) angepasst sind zum Erzeugen einer Drehbewegung jeweils um eine entsprechende zweite Drehachse (x), und bei dem die zwei Seil-Bewegungsumwandlungsmechanismen (34, 52, 98) angepasst sind zum Umwandeln der von dem entsprechenden Motor (12, 14) erzeugten Drehbewegung um die entsprechende zweite Drehachse (x) in eine Drehbewegung des Ausgangselements (18) um die erste Drehachse (z) in einer entsprechenden Richtung.

8. Aktuator nach Anspruch 7, bei dem jeder Seil-Bewegungsumwandlungsmechanismus (34, 52, 98) einen Seilwickler (34), der derart angeordnet ist, dass er durch den entsprechenden Motor (12, 14) in Drehung versetzt wird, ein erstes Seil (52), das einerseits auf den entsprechenden Seilwickler (34) gewickelt ist und andererseits mit dem entsprechenden ersten elastischen Element (20) verbunden ist, und ein zweites Seil (98) aufweist, das einerseits mit dem entsprechenden ersten elastischen Element (20) und andererseits mit dem Ausgangselement (18) verbunden ist.

9. Aktuator nach Anspruch 8, bei dem jedes erste elastische Element (20) einen Mantel (114), an dem ein Ende des entsprechenden ersten Seils (52) oder des entsprechenden zweiten Seils (98) angebracht ist, eine erste Spule (106) mit variablem Radius, auf die ein Ende des entsprechenden zweiten Seils (98) oder des entsprechenden ersten Seils (52) entsprechend gewickelt ist, und eine erste Feder (108) aufweist, die zwischen dem Mantel (114) und der ersten Spule (106) angeordnet ist, so dass sie ein elastisches Moment, das dem Abwickeln des entsprechenden zweiten Seils (98) oder des entsprechenden ersten Seils (52) entgegenwirkt, auf die erste Spule (106) ausübt.

10. Aktuator nach einem der Ansprüche 7 bis 9, wobei jedes zweite elastische Element (22) eine zweite Spule (40) mit variablem Radius, deren Drehung von dem entsprechenden Motor (12, 14) gesteuert wird, eine zweite Feder (150), die an einem ersten Ende davon mit dem Körper (11) des Aktuators verbunden ist, und ein Seil (144) aufweist, das einerseits auf die zweite Spule (40) gewickelt ist und andererseits mit dem entgegengesetzten Ende der zweiten Feder (150) verbunden ist, wodurch eine Drehung der zweiten Spule (40), die von der Aktivierung des entsprechenden Motors (12, 14) resultiert, über das entsprechende Seil (144) eine Verformung der entsprechenden zweiten Feder (150) bewirkt.

**Revendications**

1. Actionneur à flexibilité variable (10), comprenant
un élément de sortie mobile (18),
des moyens de moteur (12, 14) agencés pour commander le mouvement de l'élément de sortie (18),
un premier moyen élastique à flexibilité variable (20) interposé entre lesdits moyens de moteur (12, 14) et l'élément de sortie (18), de sorte que la transmission du mouvement entre lesdits moyens de moteur (12, 14) et l'élément de sortie (18) se produit via ledit premier moyen élastique à flexibilité variable (20), et
un corps (11) qui supporte lesdits moyens de moteur (12, 14) et l'élément de sortie (18), **caractérisé en ce qu'**il comprend en outre un second moyen élastique (22) interposé entre le corps (11) et lesdits moyens de moteur (12, 14) de manière à appliquer sur lesdits moyens de moteur (12, 14) un couple ou une force de réaction élastique opposé(e) au couple ou à la force d'entraînement généré(e) par lesdits moyens de moteur (12, 14).

2. Actionneur selon la revendication 1, dans lequel l'élément de sortie (18) est supporté par le corps (11) pour une rotation autour d'un premier axe de rotation (z), lesdits moyens de moteur (12, 14) étant agencés pour mettre l'élément de sortie (18) en rotation autour du premier axe de rotation (z).

3. Actionneur selon la revendication 1 ou la revendication 2, dans lequel ledit second moyen élastique (22) est un moyen élastique à flexibilité variable.

4. Actionneur selon la revendication 3, dans lequel lesdits premier et second moyens élastiques (20, 22) sont configurés de sorte que leur rigidité augmente lorsque lesdits moyens de moteur (12, 14) mettent l'élément de sortie (18) en mouvement.

5. Actionneur selon l'une quelconque des revendications précédentes, dans lequel lesdits moyen de moteur (12, 14) comprennent deux moteurs (12) agencés pour commander le mouvement de l'élément de sortie (18) dans des directions opposées, dans lequel ledit premier moyen élastique (20) comprend deux premiers éléments élastiques (20) interposés chacun entre un moteur respectif (12) et l'élément de sortie (18), et dans lequel ledit second moyen élastique (22) comprend deux seconds éléments élastiques (22) interposés chacun entre un moteur respectif (12) et le corps (11).

6. Actionneur selon la revendication 5, comprenant en outre deux mécanismes de conversion de mouvement de câble (34, 52, 98) associés chacun à l'un des deux moteurs (12, 14) pour convertir le mouvement généré par le moteur respectif (12, 14) en un mouvement de l'élément de sortie (18) dans une direction respective, et dans lequel les deux premiers éléments élastiques (20) font chacun partie d'un mécanisme de conversion de mouvement de câble respectif (34, 52, 98).

7. Actionneur selon la revendication 2 et la revendication 6, dans lequel les deux moteurs (12, 14) sont adaptés à générer un mouvement rotatif chacun autour d'un second axe de rotation respectif (x), et dans lequel les deux mécanismes de conversion de mouvement de câble (34, 52, 98) sont adaptés à convertir le mouvement rotatif généré par le moteur respectif (12, 14) autour du second axe de rotation respectif (x) en un mouvement rotatif de l'élément de sortie (18) autour du premier axe de rotation (z) dans une direction respective.

8. Actionneur selon la revendication 7, dans lequel chaque mécanisme de conversion de mouvement de câble (34, 52, 98) comprend un enrouleur de câble (34) agencé pour être mis en rotation par le moteur respectif (12, 14), un premier câble (52) qui est enroulé d'un côté sur l'enrouleur de câble respectif (34) et est raccordé de l'autre au premier élément élastique respectif (20), et un second câble (98) qui est raccordé d'un côté au premier élément élastique respectif (20) et de l'autre à l'élément de sortie (18).

9. Actionneur selon la revendication 8, dans lequel chaque premier élément élastique (20) comprend une enveloppe (114) à laquelle une extrémité du premier câble respectif (52) ou du second câble respectif (98) est fixée, une première bobine à rayon variable (106) sur laquelle une extrémité du second câble respectif (98) ou du premier câble respectif (52), respectivement, est enroulée, et un premier ressort (108) interposé entre l'enveloppe (114) et la première bobine (106) de manière à appliquer sur la première bobine (106) un couple élastique opposé au déroulement du second câble respectif (98) ou du premier câble respectif (52).

10. Actionneur selon l'une quelconque des revendications 7 à 9, dans lequel chaque second élément élastique (22) comprend une seconde bobine à rayon variable (40) dont la rotation est commandée par le moteur respectif (12, 14), un second ressort (150) raccordé au niveau d'une première extrémité de celui-ci au corps (11) de l'actionneur, et un câble (144) qui est enroulé d'un côté sur la seconde bobine (40) et est raccordé de l'autre côté à l'extrémité opposée du second ressort (150), au moyen duquel la rotation de la seconde bobine (40) résultant de l'activation du moteur respectif (12, 14) provoque, via le câble respectif (144), une déformation du second ressort respectif (150).

FIG. 1

FIG. 2

FIG. 10

FIG. 3

EP 2 890 527 B1

FIG. 4

FIG. 5

EP 2 890 527 B1

FIG. 6

FIG. 7

FIG. 9

FIG. 8

EP 2 890 527 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006249315 A1